# EUROPEAN PATENT SPECIFICATION

(11) **EP 2 947 713 B1**
(45) Date of publication and mention of the grant of the patent: **04.10.2017**
(21) Application number: 15168351.3
(22) Date of filing: 20.05.2015
(51) Int. Cl.: H01M 4/58, C01B 25/26, C01B 25/45, H01M 10/052

(54) **HIGH VOLTAGE LITHIUM ION POSITIVE ELECTRODE MATERIAL**
POSITIVES HOCHSPANNUNGS-LITHIUM-IONEN-ELEKTRODENMATERIAL
MATÉRIAU D'ÉLECTRODE POSITIVE LITHIUM-ION À HAUTE TENSION

(30) Priority: 20.05.2014 US 201414281924
(43) Date of publication of application: 25.11.2015
(73) Proprietor: The United States of America as represented by the Secretary of the Army, Washington, DC 20310 (US)
(72) Inventor: Allen, Jan L., Silver Spring, MD, 20910 (US); Allen, Joshua L., Columbia, MD, 21044 (US); Delp III, Samuel A., Silver Spring, MD, 20910 (US); Wolfenstine, Jeffery, Silver Spring, MD, 20902 (US); Jow, T. Richard, Potomac, MD, 20854 (US)
(74) Representative: Lang, Johannes

(56) References cited:
- WO-A1-2013/016426
- US-A1- 2003 190 527
- US-A1- 2012 273 716

## Description

The present invention relates in general to a positive electrode material, and in particular to a high voltage lithium ion positive electrode material.

LiFePO₄ [1] is a Li-ion positive electrode material that has been favored for its strong abuse tolerance which in turn has been attributed to the nature of the oxygen bonding in the phosphate group [2]. Also, it is desirable to harness the abuse tolerance of a phosphate based cathode in a material that stores more energy. One possibility is to look to higher voltage olivines such as LiMnPO₄ [1] 4.1 V, LiCoPO₄ [3] 4.8 V or LiNiPO₄ [4] 5.1V since the stored energy is proportional to the voltage. LiCoPO₄ in particular has the potential to increase energy ∼ 40% compared to LiFePO₄. Furthermore, its electronic structure is more favorable than LiMnPO₄ and LiNiPO₄ in terms of polaronic conductivity and ability to form polarons, respectively [5].

However, and even though initial research on LiCoPO₄ led to improvements in the rate of discharge, capacity fade has blocked further progress [6-10]. As such, an improved Li-ion positive electrode material with a high discharge capacity and low capacity fade would be desirable.

US2012/273716 discloses a lithium ion positive electrode material of the prior art.

A Li-ion positive electrode material is provided. The material has a nominal stoichiometry of Li_{1+y/2}Co_{1-x-y-z-d}Si_{z}FeₓM_{y}M'_{d}(PO₄)_{1+y/2} where M is a trivalent cation of Cr or Ti, M' is a divalent cation selected from at least one of Mn, Ni, Zn, Sr, Cu, Ca and/ or Mg, y is within a range of 0.02≦y≦0.08, x is within a range of 0.05≦x≦0.15, z is within a range of 0 ≤ z ≤ 0.1 and d is within a range of 0 ≤ d ≤ 0.20. In some instances, d is within the range of 0 ≤ d ≤ 0.10, and preferably within the range of 0 ≤ d ≤ 0.05. The Li-ion positive electrode material has an initial capacity of at least 120 mAh/g and a discharge capacity of at least 100 mAh/g after 500 cycles.

In some instances, y is within the range of 0.04 ≤ y ≤ 0.06, x is within the range of 0.08 ≤ x ≤ 0.12 and M = Cr or Ti. In still other instances, y = 0.05, x = 0.10 and M = Cr or Ti.

In one embodiment, z and d are equal to zero, and the Li-ion positive electrode material has a nominal stoichiometry of Li_{1.025}Co_{0.85}Fe_{0.10}Cr_{0.05}(PO₄)_{1.025}, an initial capacity of at least 125 mAh/g and a discharge capacity of at least 105 mAh/g after 500 cycles.

In another embodiment, d is equal to zero, z is not equal to zero, the positive electrode material contains Si and the Li-ion positive electrode material has a nominal stoichiometry of Li_{1+y/2}Co_{1-x-y-z}Si_{z}FeₓM_{y}(PO₄)_{1+y/2} where x and y have the values given above and z is within a range of 0 < z ≤ 0.1, preferably within a range of 0 < z ≤ 0.05, and more preferably within a range of 0 < z ≤ 0.02. In some instances z = 0.01. Also, the addition of Si improves the coulombic efficiency of the material and in some instances the coulombic efficiency is between 97-100% at a C/3 cycle rate.
Figure 1 is a graphical plot of discharge capacity as a function of cycle number for samples of composition Li_{1+y/2}Co_{1-x-y}FeₓM_{y}(PO₄)_{1+y/2} with M = Cr, Ti, Al, and Ga, and where 10Ti10Fe represents Li_{1.05}Co_{0.80}Fe_{0.10}Ti_{0.10}(PO₄)_{1.05}, 5Ti10Fe represents Li_{1.025}Co_{0.85}Fe_{0.10}Ti_{0.05}(PO₄)_{1.025}, etc.;
Figure 2 is a graphical plot of discharge capacity as a function of cycle number for materials according to an embodiment of the present invention;
Figure 3 is a graphical illustration of long term discharge capacity as a function of cycle number for materials according to an embodiment of the present invention;
Figure 4 is a graphical plot of X-ray powder diffraction patterns for Li_{1.05}Co_{0.8}Fe_{0.10}Cr_{0.10}(PO₄)_{1.05} (Top) and Li_{1.025}Co_{0.85}Fe_{0.10}Cr_{0.05}(PO₄)_{1.025} (Bottom), with the peaks labeled with the Miller indices of the phospho-olivine structure, Pnma spacegroup.
Figure 5 is a graphical plot of X-ray powder diffraction patterns of Li_{1.05}Co_{0.8}Fe_{0.10}Ti_{0.10}(PO₄)_{1.05} (Top), Li_{1.025}Co_{0.85}Fe_{0.10}Ti_{0.05}(PO₄)_{1.025} (Middle) and Li_{1.0125}Co_{0.875}Fe_{0.10}Ti_{0.025}(PO₄)_{1.0125}. (Bottom), with the peaks labeled with the Miller indices of the phospho-olivine structure, Pnma spacegroup;
Figure 6 is a graphical plot of voltage versus discharge capacity of Li_{1.025}Co_{0.85}Fe_{0.10}Cr_{0.05}(PO₄)_{1.025} as a function of rate;
Figure 7 is a graphical plot of capacity and coulombic efficiency of: (A) Li_{1.025} Co_{0.85}Fe_{0.10}Cr_{0.05}(PO₄)_{1.025}; versus (B) Li₁.₀₂₅ Co_{0.84}Si_{0.01}Fe_{0.10}Cr_{0.05}(PO₄)_{1.025};
Figure 8 is a graphical plot of capacity and coulombic efficiency of: (A) Li_{1.025} Co_{0.85}Fe_{0.10}Ti_{0.05}(PO₄)_{1.025}; versus (B) Li_{1.025} Co_{0.84}Si_{0.01}Fe_{0.10}Ti_{0.05}(PO₄)_{1.025};
Figure 9 is a graphical plot of an X-ray powder diffraction pattern of Li_{1.025} Co_{0.84}Si_{0.01}Fe_{0.10}Cr_{0.05}(PO₄)_{1.025}; and
Figure 10 is a graphical plot of an X-ray powder diffraction pattern of Li_{1.025} Co_{0.84}Si_{0.01}Fe_{0.10}Ti_{0.05}(PO₄)_{1.025}.

An improved Li-ion positive electrode material with an initial capacity of at least 120 mAh/g and a discharge capacity of at least 100 mAh/g after 500 cycles is provided. In some instances, the improved Li-ion positive electrode material has initial capacity of at least 125 mAh/g and a discharge capacity of at least 105 mAh/g after 500 cycles. In addition, the material can contain Si which provides an coulombic efficiency to between 97-100% at a C/3 cycle rate.

It is appreciated that the improved capacity and dramatically reduced capacity fade is striking relative to LiCoPO₄. The use of a double compositional modification increases the discharge capacity from ∼100 mAh/g to about 130 mAh/g in the most favorable cases for Ti and Fe or Cr and Fe modification of LiCoPO₄, while retaining the discharge capacity retention of the singly Fe-substituted LiCoPO₄. Additional compositional modification to include Si increases the cycle life and greatly improves the coulombic efficiency to between 97-100% at a C/3 cycle rate.

The material has a nominal stoichiometry of Li_{1+y/2}Co_{1-x-y-z-d}Si_{z}FeₓM_{y}M'_{d}(PO₄)_{1+y/2} where M is a trivalent cation of Cr or Ti, M' is a divalent cation selected from at least one of Mn, Ni, Zn, Sr, Cu, Ca and/or Mg, y is within a range of 0.02≦y≦0.08, x is within a range of 0.05≦x≦0.15, z is within the range of 0 ≤ z ≤ 0.1 and d is within the range of 0 ≤ d ≤ 0.20. In some instances, y is within the range of 0.04 ≤ y ≤ 0.06, x is within the range of 0.08 ≤ x ≤ 0.12 and M = Cr or Ti. In still other instances, y = 0.05, x = 0.10 and M = Cr or Ti.

The positive electrode material can also contain Si and the Li-ion positive electrode material can have a nominal stoichiometry of Li_{1+y/2}Co_{1-x-y-z}Si_{z}FeₓM_{y}(PO₄)_{1+y/2} where x and y have the values given above and z is within a range of 0 < z ≤ 0.1, preferably within a range of 0 < z ≤ 0.05, and more preferably within a range of 0 < z ≤ 0.02. In some instances z = 0.01.

In order to better teach the invention but not limit its scope in any way, a solid state synthesis method for making the Li_{1+y/2}Co_{1-x-y-z-d}Si_{z}FeₓM_{y}M'_{d}(PO₄)_{1+y/2} material and one or more examples of the inventive material are discussed below.

Samples of Li_{1+y/2} Co_{1-x-y}FeₓM_{y}(PO₄)_{1+y/2} with M = Cr, Ti, Al and/or Ga, 0 < y ≤ 0.10 and 0 ≤ x ≤ 0.2 were prepared via a solid state route. Stoichiometric amounts of Co(OH)₂, LiH₂PO₄, Cr₂O₃, TiO₂, Al(OH)₃, Ga₂O₃, FeC₂O₄.2H₂O and/or acetylene black (5 wt.% of final product) were ball-milled for 90 minutes. The mixture was then heated at a heating rate of 10 °C min⁻¹ to 700 °C under flowing N₂ and then the reactant mixture was held at this temperature for 12 h. Samples of Li_{1.025}Co_{0.84}Si_{0.01}Fe_{0.10}M_{0.05}(PO₄)_{1.025} with M = Cr or Ti were prepared via the same method using Si(OOCCH₃)₄ as the Si source.

The resulting crystalline phase(s) were identified using X-ray powder diffraction. X-ray data were collected using a Rigaku Ultima III diffractometer. Lattice constants were calculated from peak positions using Rietveld refinement of the pattern collected in a parallel beam geometry. For electrochemical testing, a composite electrode was fabricated by a slurry coating method. Using N-methylpyrrolidone (NMP) as solvent, a slurry was used to coat an Al foil substrate to produce a composite electrode of ca. 80 wt.% active material, 10 wt.% polyvinylidene fluoride (PVDF), 8 wt.% super-P carbon and 2 wt.% conductive carbon nanotube composite (CheapTubes.com). The electrode film was cut into small discs with an area of 0.97 cm² and dried under an infrared lamp in air before use. In a dry room (Dew point < -50 °C), Li/active coin cells (Hohsen Al-clad CR2032) were assembled using 3 layers of Celgard® 2400 as the separator and a 1.0 molal LiPF₆ solution in a 3:7 (wt.%) mixture of ethylene carbonate (EC) and ethyl methyl carbonate (EMC) electrolyte with 1 wt.% HFiP. Also, 100-150 µL of electrolyte was used per coin cell and electrochemical testing was performed using a Maccor Series 4000 tester. For calculation of C-rate, a capacity of ∼150 mA h g⁻¹ was assumed.

Substitution of elements *in addition to Fe for Co,* including Cr, Ti, Al and Ga, increased the discharge capacity of Fe-substituted LiCoPO₄ while maintaining long cycle life. Not being bound by theory, a nominal stoichiometry, Li_{1+y/2}Co_{1-x-y}FeₓM_{y}(PO₄)_{1+y/2}, (M = Cr, Ti, Al and/or Ga) that favors substitution on the Co site and cation vacancies exhibited favorable performance since substitution on the Li site blocks Li-ion conduction. In addition, the above stoichiometry favors the presence of cation vacancies that might enhance Li-ion conductivity.

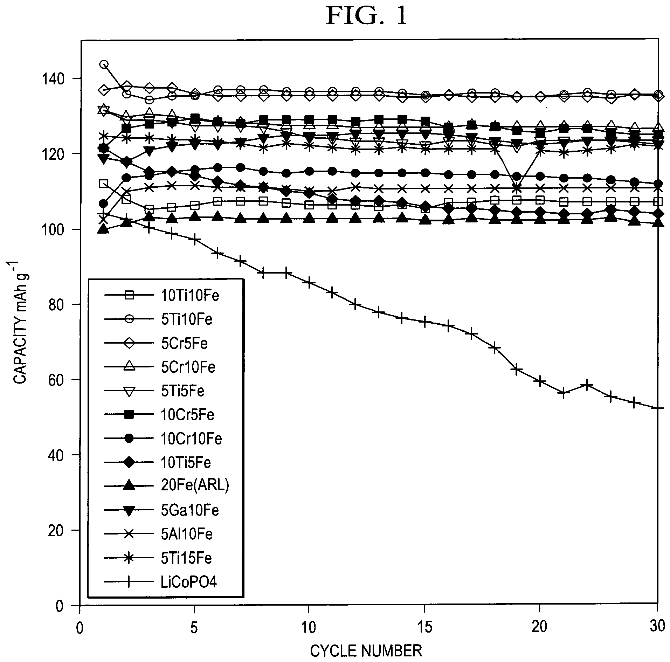

Turning now to Figure 1, capacity as a function of cycle for a number of different compositions are shown. The Ti,Fe and Cr,Fe double modifications exhibited the most favorable discharge capacity and cycle life. Furthermore, a composition level was discovered to be 0.10 for Fe and 0.05 for Ti or Cr. All samples exhibited superior cycle life compared to LiCoPO₄ and increased discharge capacity relative to singly Fe-substituted LiCoPO₄ -- labeled 20Fe(ARL) in the figure and corresponds to nominal stoichiometry of LiCo_{0.8}Fe_{0.2}PO₄).

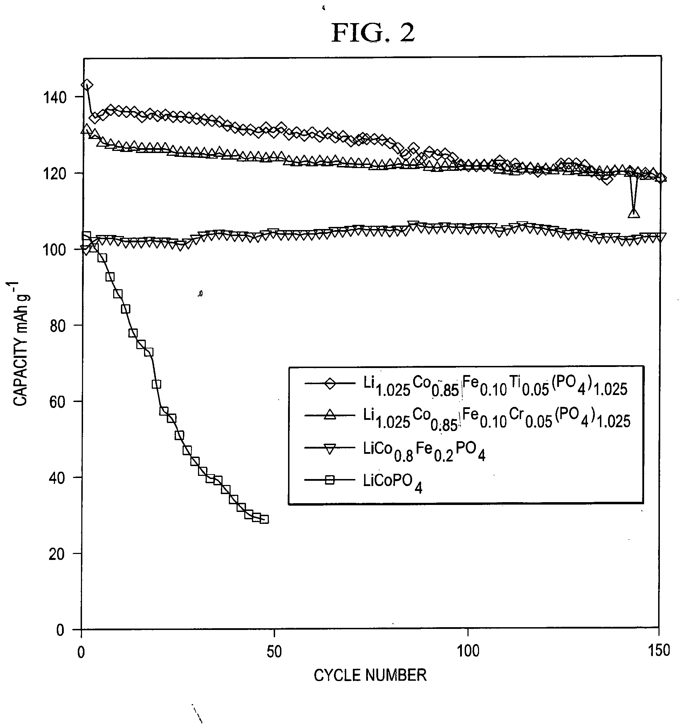

Figure 2 demonstrates the effect of Ti,Fe and Cr,Fe double compositional modifications on the capacity fade at the optimized dopant level of 0.10 Fe and 0.05 Ti or Cr. All samples including the un-substituted LiCoPO₄ control sample were cycled between 3.5 and 5 V using 1 M LiPF₆ in 3:7 by weight ethylene carbonate: ethyl methyl carbonate electrolyte containing 1 wt.% HFiP electrolyte additive. Cells were charged using a C/3 constant current to 5 V followed by a constant voltage of 5 V until the current was less than C/15. It is appreciated that the terms "C", "C/3", "C/15", etc., refer to the C-rate used by the battery industry to scale the charge and discharge current of a battery. For example, a 1,000mAh battery discharged at a 1C rate ideally provides a current of 1,000mA for one hour, whereas a C/2 discharge rate for a 1,000mAh battery ideally provides a current of 500mA for two hours.

As shown in Figure 2, the un-substituted LiCoPO₄ control sample exhibited severe capacity fade. However, the Fe-substitution into LiCoPO₄ (nominal LiCo_{0.8}Fe_{0.2}PO₄) had a significant reduction in capacity fade relative to the un-substituted LiCoPO₄. Also, increasing the discharge capacity by further composition modification with another element in addition to Fe is shown. For example, the Li_{1.025}Co_{0.85}Fe_{0.10}Cr_{0.05}(PO₄)_{1.025} sample showed better capacity retention with cycling despite having a slightly smaller initial discharge capacity than Li_{1.025}Co_{0.85}Fe_{0.10}Ti_{0.05}(PO₄)_{1.025}.

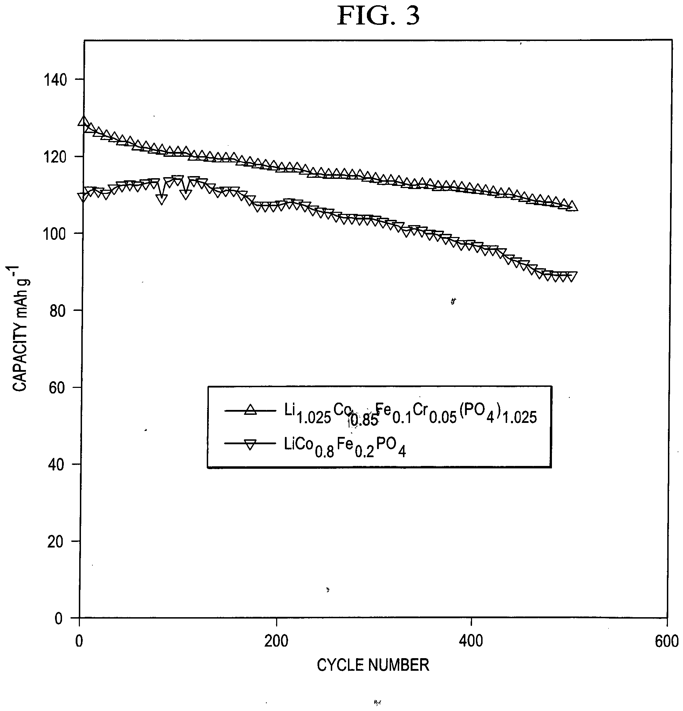

Figure 3 compares the long term cycling of composition Li_{1.025}Co_{0.85}Fe_{0.10}Cr_{0.05}(PO₄)_{1.025} relative to LiCo_{0.8}Fe_{0.2}PO₄. The Fe-substituted LiCoPO₄ retained about 80% of its capacity at the 500th cycle (89 of 108 mAh g⁻¹ initial capacity). The Cr and Fe-doubly substituted LiCoPO₄ had an initial capacity higher than Fe substituted LiCoPO₄, but also retained about 80 % of capacity at the 500^{th} cycle (107 of 131 mAh g⁻¹ initial capacity).

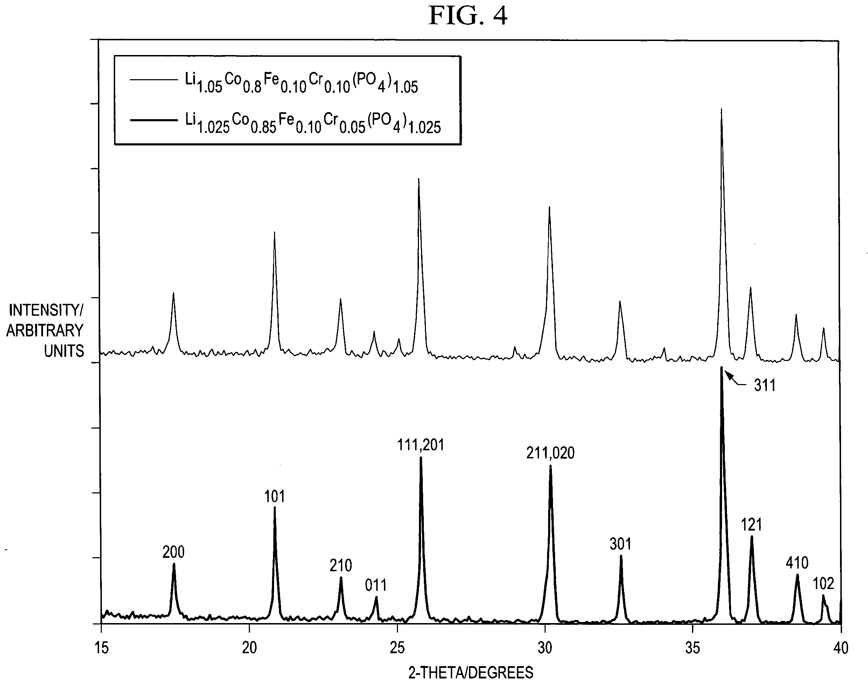

Figure 4 is a comparison the XRD patterns of Li_{1+y/2}Co_{0.90-y}Fe_{0.10}Cr_{y}(PO₄)_{1+y/2} where y = 0.05 and 0.10. As observed in the lower XRD pattern, Li_{1.025}Co_{0.85}Fe_{0.10}Cr_{0.05}(PO₄)_{1.025} forms a phospho-olivine structure without other XRD detectable phases. The pattern can be indexed to the phospho-olivine structure confirming that a single phase was present. From Rietveld analysis of the X-ray diffraction data, the unit cell volume of Li_{1.025}Co_{0.85}Fe_{0.10}Cr_{0.05}(PO₄)_{1.025} was determined to be 282.9 Å³. Also, the lattice parameters are listed in Table 1 below with comparison to LiCoPO₄ [11] and LiCo_{0.9}Fe_{0.1}PO₄ [12]. The unit cell volumes of LiCoPO₄ and LiCo_{0.9}Fe_{0.1}PO₄ are 284.3 Å³ and 285.1 Å³, respectively. This decrease in unit cell volume for Li_{1.025}Co_{0.85}Fe_{0.10}Cr_{0.05}(PO₄)_{1.025} is consistent with the substitution of the considerably smaller 6-coordinate Cr³⁺ (effective ionic radius = 0.615 Å [13]) for Co²⁺ (effective ionic radius = 0.745 Å [13]) and Fe²⁺ (effective ionic radius = 0.780 Å [13]), and the presence of cation vacancies which are required to maintain charge neutrality. The decrease in unit cell volume for the Cr,Fe substituted LiCoPO₄ results from a decrease in the *a* and *b* lattice parameters with little change in the *c* parameter.

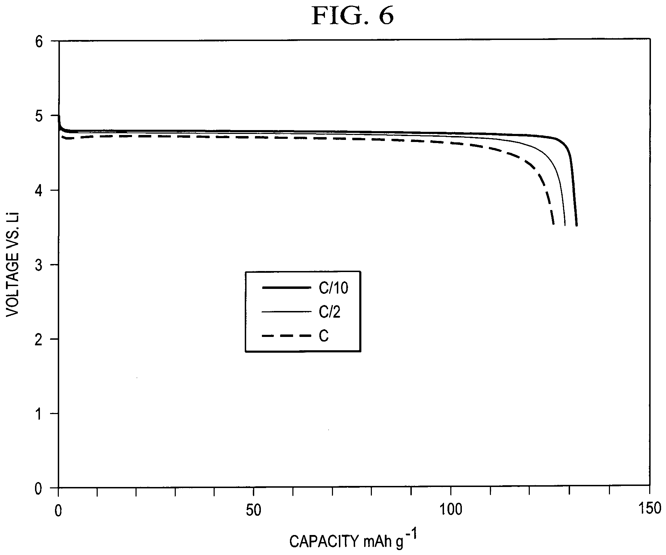

Not being bound by theory, improved discharge electrochemical performance may likely result from increased electronic and/or ionic conductivity. The Li-ion conductivity is, of course, a function of the Li-ion concentration and the Li-ion mobility. Since there is little difference in the Li-ion concentration between the modified LiCoPO₄ and the unmodified LiCoPO₄, the increased Li-ion mobility is a likely hypothesis for the improvement in discharge capacity and rate capability (rate shown in Figure 6) of Cr,Fe-substituted LiCoPO₄ relative to LiCoPO₄.

**Table 1**

| Nominal composition | *a* (Å) | *b* (Å) | *c* (Å) | *V* (Å³) |
|---|---|---|---|---|
| LiCoPO₄ | 10.2048 | 5.9245 | 4.7017 | 284.3 |
| LiCo_{0.9}Fe_{0.1}PO₄ | 10.2175 | 5.9335 | 4.7025 | 285.1 |
| Li_{1.025}Co_{0.85}Fe_{0.10}Cr_{0.05}(PO₄)_{1.025} | 10.1703 | 5.9204 | 4.6991 | 282.9 |
| Li_{1.025}Co_{0.85}Fe_{0.10}Ti_{0.05}(PO₄)_{1.025} | 10.2019 | 5.9299 | 4.6976 | 284.2 |
| Li_{1.025}Co_{0.84}Si_{0.01}Fe_{0.10}Cr_{0.05}(PO₄)_{1.025} | 10.2009 | 5.9314 | 4.6999 | 284.4 |
| Li_{1.025}Co_{0.84}Si_{0.01}Fe_{0.10}Ti_{0.05}(PO₄)_{1.025} | 10.2060 | 5.9308 | 4.6986 | 284.4 |

When a higher Cr content was prepared, Li_{1.05}Co_{0.8}Fe_{0.10}Cr_{0.10}(PO₄)_{1.05}, the XRD pattern showed an extra peak around 25 degrees two-theta which matches Li₉Cr₃P₈O₂₉. This is in agreement with the electrochemical results which showed an optimal level of 0.05 Cr, since at a higher Cr content a non-electrochemically active second phase (Li₉Cr₃P₈O₂₉) appears.

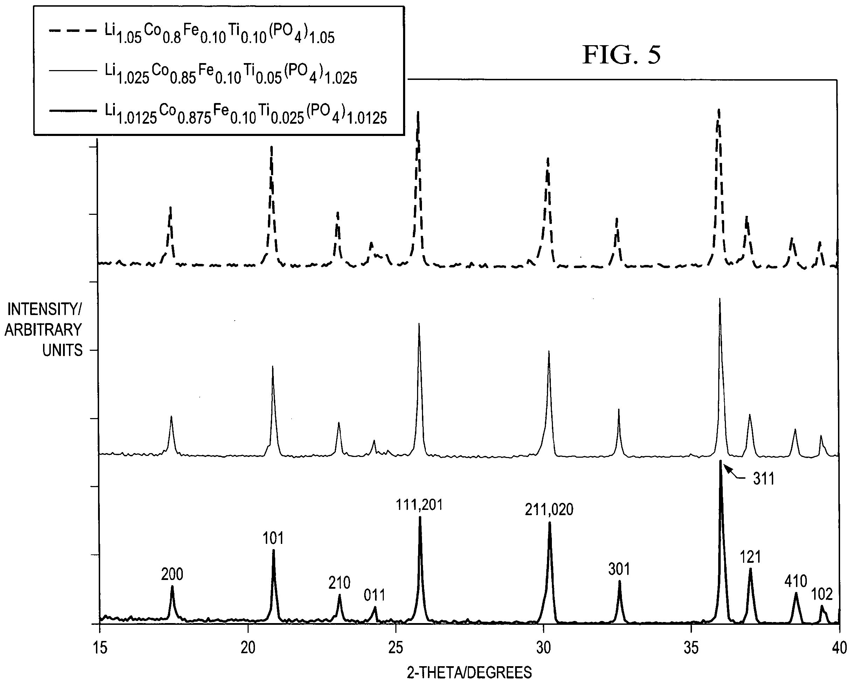

Figure 5 compares the XRD patterns of Li_{1+y/2}Co_{0.90-y}Fe_{0.10}Ti_{y}(PO₄)_{1+y/2} where y = 0.025, 0.05 and 0.10. The pattern matches LiCoPO₄ except for a broad peak at approximately 24.5 degrees two-theta which can be assigned to a LiTi₂(PO₄)₃-like phase that is present in all the Ti-containing samples. This secondary phase grows as the Ti level increases. A unit cell volume of Li_{1.025}Co_{0.85}Fe_{0.10}Ti_{0.05}(PO₄)_{1.025} was determined to be 284.4 Å³. The lattice parameters also are listed in Table 1 with comparison to LiCoPO₄ [11] and LiCo_{0.9}Fe_{0.1}PO₄ [12]. The unit cell volumes of LiCoPO₄ and LiCo_{0.9}Fe_{0.1}PO₄ are 284.3 Å³ and 285.1 Å³, respectively. The slightly smaller unit cell is consistent with the substitution of either Ti⁴⁺ (0.65 Å) or Ti³⁺ (0.67 Å) for Co²⁺ (0.745 Å)[13].

The presence of the secondary LiTi₂(PO₄)₃-like phase suggests that the mechanism to increase the electrochemical performance of Ti,Fe-substituted LiCoPO₄ may differ from that of the Cr,Fe substituted LiCoPO₄. As previously discussed, at a 0.05 Cr substitution level, a bulk substitution for Co is obtained. In contrast, the Ti, Fe modified LiCoPO₄ samples all contain a small fraction of a LiTi₂(PO₄)₃ -like phase and we therefore suggest that the improvement in electrochemical performance for Ti,Fe modified LiCoPO₄ may result from the beneficial effect this phase has on the Li-ion conductivity of the substituted LiCoPO₄.

The LiTi₂(PO₄)₃ -like phase has the NASICON structure and it is known to be an excellent Li-ion conductor as a result of the structural characteristics of the NASICON structure which favor high Li-ionic conductivity. Furthermore, the interface of two Li-ion conducting materials can lead to orders of magnitude increased Li-ion conductivity on both sides of the interface through a synergistic effect.

Having shown the improvements in capacity fade because of double compositional modifications of LiCoPO₄, the favorable effects of composition modification on the capacity of Li_{1.025}Co_{0.85}Fe_{0.10}Cr_{0.05}(PO₄)_{1.025} as a function of rate are shown in Figure 6. Typical discharge curves at three rates, C/10, C/2 and C are plotted. The capacity at C/10 is about 132 mAh/g. At a 1C rate the capacity is about 126 mAh/g, thus the material shows an excellent rate capability. The improvements are suggested to result from enhanced Li-ion conduction.

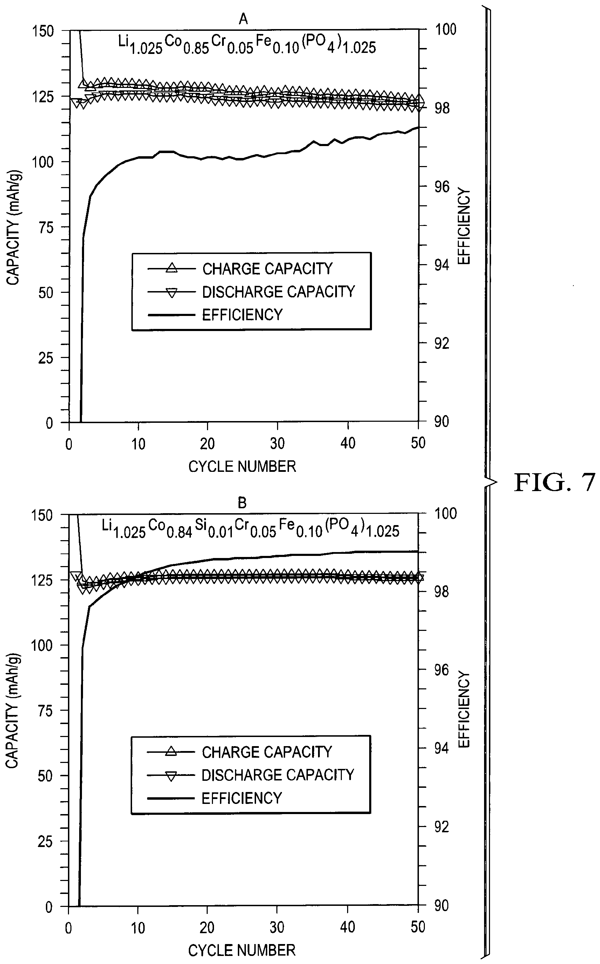

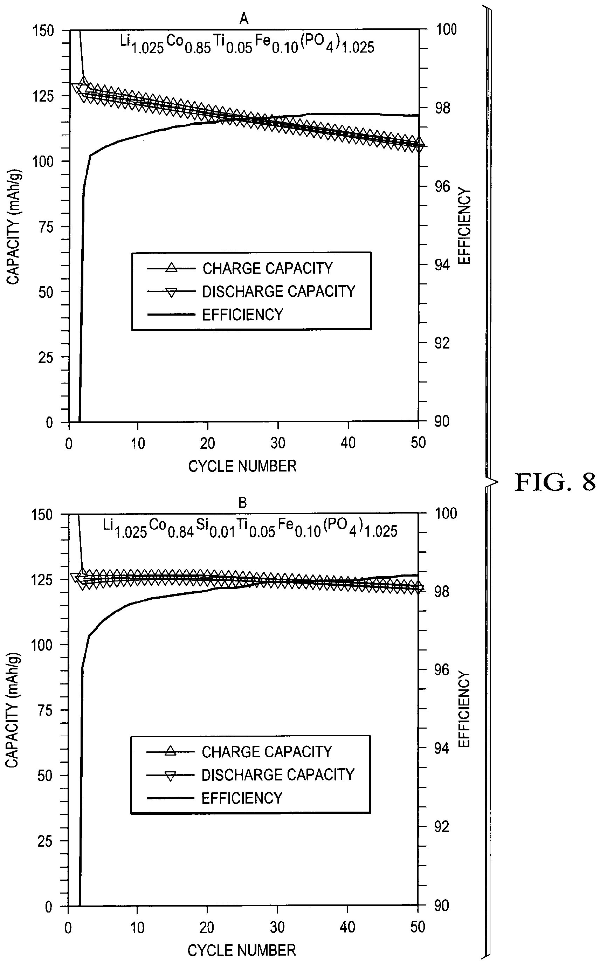

In addition to the above, the coulombic efficiency of the nominal composition of Li_{1.025}Co_{0.84}Si_{0.01}Fe_{0.10}M_{0.05}(PO₄)_{1.025} with M = Cr or Ti was improved by adding Si. The discharge capacity as a function of cycle and cycle life is shown in Figure 7 for Li_{1.025}Co_{0.84}Si_{0.01}Fe_{0.10}Cr_{0.05}(PO₄)_{1.025} relative to its Si free analog. As shown in the figure, a significant improvement in the coulombic efficiency and cycle life was observed. Li_{1.025}Co_{0.84}Si_{0.01}Fe_{0.10}Ti_{0.05}(PO₄)_{1.025} showed a similar improvement in coulombic efficiency and an even greater improvement in cycle life as shown in Figure 8.

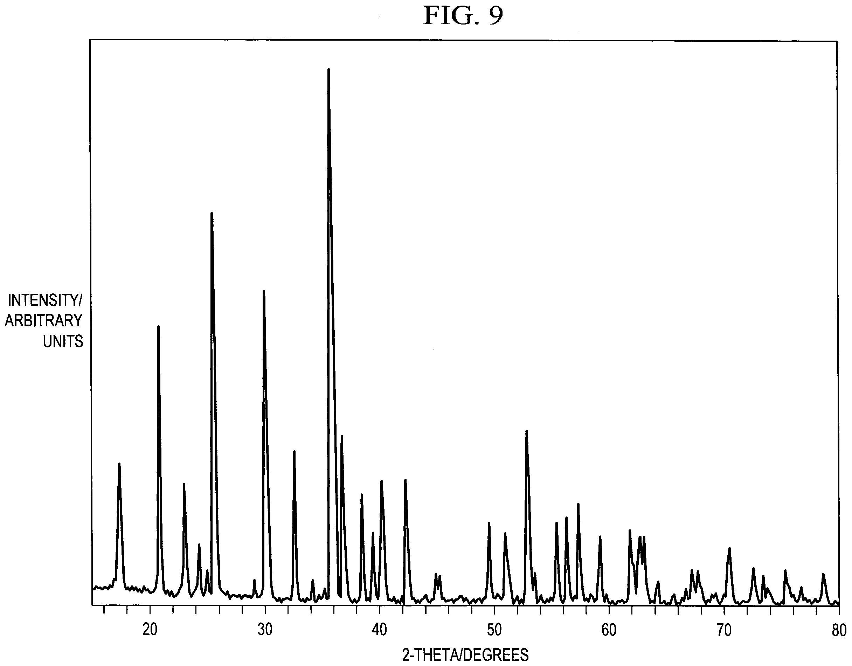

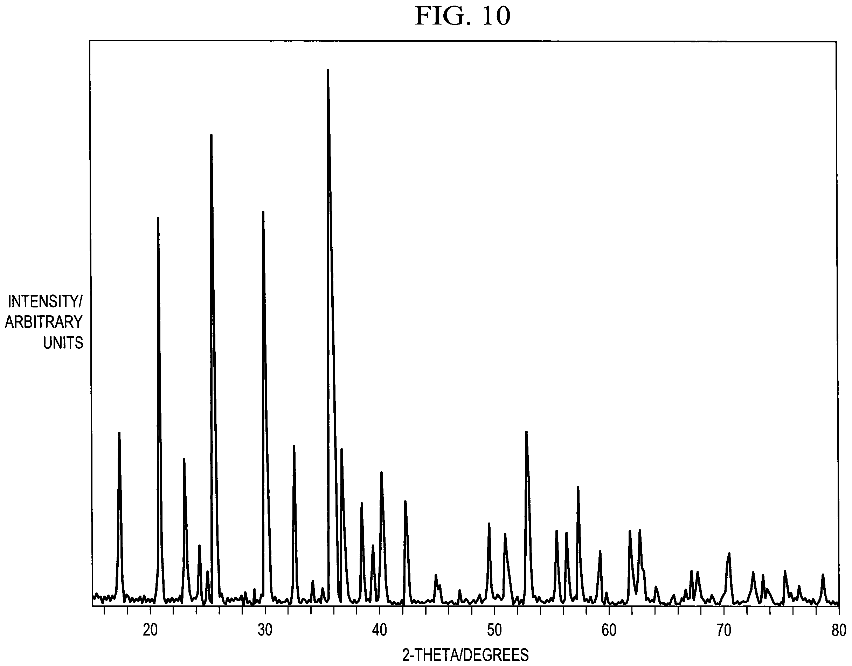

The x-ray diffraction pattern of the nominal composition Li_{1.025}Co_{0.84}Si_{0.01}Fe_{0.10}Cr_{0.05}(PO₄)_{1.025} is shown in Figure 9. There is a peak around 25 degrees which does not correspond to the phospho-olivine structure. This might either be Si related or Li₉Cr₃P₈O₂₉ as previously discussed. The lattice constants (see Table 1) show a decrease in the unit cell volume relative to LiFe_{0.10}Co_{0.90}PO₄, but the unit cell volume is larger than Li_{1.025}Co_{0.85}Fe_{0.10}Cr_{0.05}(PO₄)_{1.025}, and suggests that inclusion of Si in the starting composition reduces the amount of Cr that can be substituted into LiCoPO₄. However the reduced unit cell volume relative to LiFe_{0.10}Co_{0.90}PO₄ indicates that some substitution on the Co lattice site is still occurring. From a crystal chemistry perspective, Cr (effective radius = 0.615 Å [13]) is more likely to substitute for Co (effective ionic radius of 0.745 Å [13]) than Si (effective ionic radius of 0.40 Å [13]). The x-ray diffraction pattern of nominal composition Li_{1.025}Co_{0.84}Si_{0.01}Fe_{0.10}Ti_{0.05}(PO₄)_{1.025} is shown in Figure 10. There is a peak around 24.6 degrees two-theta which does not correspond to the phospho-olivine structure. This peak might be attributed to a Li₂Si₂O₅, but a definitive assignment was not made since only 1 peak is evident and it falls within the same region as the LiTi₂(PO₄)₃-like phase discussed earlier for Ti containing samples. The unit cell volume (Table 1) for this sample was found to be 284.41 Å³, indicating no change from the Si free analog within the uncertainty of the measurement.

The scope of the invention is defined by the claims.

## Claims

1. A positive electrode material comprising Li, Co, Fe and phosphate, **characterized in that** it comprises:
a Li-ion positive electrode material having a nominal stoichiometry of:
Li_{1+y/2}Co_{1-x-y-z-d}Si_{z}FeₓM_{y}M'_{d}(PO₄)_{1+y/2}
where M is a trivalent cation of Cr, M' is a divalent cation selected from at least one of Mn, Ni, Zn, Sr, Cu, Ca and/or Mg, y is within a range of 0.02 ≤ y ≤ 0.08, x is within a range of 0.05 ≤ x ≤ 0.15, z is within a range of 0 ≤ z ≤ 0.10 and d is within a range of 0 ≤ d ≤ 0.20.

2. A positive electrode material comprising Li, Co, Fe and phosphate, **characterized in that** it comprises:
a Li-ion positive electrode material having a nominal stoichiometry of:
Li_{1+y/2}Co_{1-x-y-z-d}Si_{z}FeₓM_{y}M'_{d}(PO₄)_{1+y/2}
where M is a trivalent cation of Ti, M' is a divalent cation selected from at least one of Mn, Ni, Zn, Sr, Cu, Ca and/or Mg, y is within a range of 0.02 ≤ y ≤ 0.08, x is within a range of 0.05 ≤ x ≤ 0.15, z is within a range of 0 ≤ z ≤ 0.10 and d is within a range of 0 ≤ d ≤ 0.20.

3. The positive electrode material according to claim 1 or 2, wherein said Li-ion positive electrode material has an initial capacity of at least 120 mAh/g.

4. The positive electrode material according to any of claims 1 to 3, wherein said Li-ion positive electrode material has a discharge capacity of at least 100 mAh/g after 500 cycles.

5. The positive electrode material of any of claims 1 to 4, wherein z = 0.

6. The positive electrode material of claim 5, wherein y is within the range of 0.04 ≤ y ≤ 0.06 and x is within the range of 0.08 ≤ x ≤ 0.12.

7. The positive electrode material of claim 6, wherein y = 0.05 and x = 0.10.

8. The positive electrode material of any of claims 1 and 3 to 7, wherein M = Cr and said Li-ion positive electrode material has an initial capacity of at least 125 mAh/g and a discharge capacity of at least 105 mAh/g after 500 cycles.

9. The positive electrode material of claim 7, wherein M = Ti.

10. The positive electrode material of any of claims 1 to 4, 8 and 9, wherein z is within a range of 0 < z ≤ 0.1.

11. The positive electrode material of claim 10, wherein said Li-ion positive electrode material has a coulombic efficiency between 97-100% at a C/3 cycle rate.

12. The positive electrode material of claim 10 or 11, wherein z is within the range of 0 < z ≤ 0.05.

13. The positive electrode material of claim 12, wherein z is within the range of 0 < z ≤ 0.02.

14. The positive electrode material of claim 13, wherein z = 0.01.

15. The positive electrode material of claim 14, wherein d = 0.

16. Use of the positive electrode material according to any of claims 1 to 15 as a high voltage lithium ion positive electrode material.

## Patentansprüche

1. Positives Elektrodenmaterial, umfassend Li, Co, Fe und Phosphat, **dadurch gekennzeichnet, dass** es umfasst:
ein positives Li-Ionen-Elektrodenmaterial mit einer nominalen Stöchiometrie von:
Li_{1+y/2}Co_{1-x-y-z-d}Si_{z}FeₓM_{y}M'_{d}(PO₄)_{1+y/2}
wobei M ein dreiwertiges Kation von Cr ist, M' ein zweiwertiges Kation ist, ausgewählt aus wenigstens einem von Mn, Ni, Zn, Sr, Cu, Ca und/oder Mg, y innerhalb eines Bereichs von 0,02 ≤ y ≤ 0,08 liegt, x innerhalb eines Bereichs von 0,05 ≤ x ≤ 0,15 liegt, z innerhalb eines Bereichs von 0 ≤ z ≤ 0,10 liegt, und d innerhalb eines Bereichs von 0 ≤ d ≤ 0,20 liegt.

2. Positives Elektrodenmaterial, umfassend Li, Co, Fe und Phosphat, **dadurch gekennzeichnet, dass** es umfasst:
ein positives Li-Ionen-Elektrodenmaterial mit einer nominalen Stöchiometrie von:
Li_{1+y/2}Co_{1-x-y-z-d}Si_{z}FeₓM_{y}M'_{d}(PO₄)_{1+y/2}
wobei M ein dreiwertiges Kation von Ti ist, M' ein zweiwertiges Kation ist, ausgewählt aus wenigstens einem von Mn, Ni, Zn, Sr, Cu, Ca und/oder Mg, y innerhalb eines Bereichs von 0,02 ≤ y ≤ 0,08 liegt, x innerhalb eines Bereichs von 0,05 ≤ x ≤ 0,15 liegt, z innerhalb eines Bereichs von 0 ≤ z ≤ 0,10 liegt, und d innerhalb eines Bereichs von 0 ≤ d ≤ 0,20 liegt.

3. Positives Elektrodenmaterial gemäß Anspruch 1 oder 2, wobei das positive Li-Ionen-Elektrodenmaterial eine Anfangskapazität von wenigstens 120 mAh/g aufweist.

4. Positives Elektrodenmaterial gemäß irgendeinem der Ansprüche 1 bis 3, wobei das positive Li-Ionen-Elektrodenmaterial eine Entladungskapazität von wenigstens 100 mAh/g nach 500 Zyklen aufweist.

5. Positives Elektrodenmaterial nach irgendeinem der Ansprüche 1 bis 4, wobei z=o.

6. Positives Elektrodenmaterial nach Anspruch 5, wobei y innerhalb des Bereichs von 0,04 ≤ y ≤ 0,06 liegt und x innerhalb des Bereichs von 0,08 ≤x ≤ 0,12 liegt.

7. Positives Elektrodenmaterial nach Anspruch 6, wobei y = 0,05 und x = 0,10.

8. Positives Elektrodenmaterial nach irgendeinem der Ansprüche 1 und 3 bis 7, wobei M = Cr und das positive Li-Ionen-Elektrodenmaterial eine Anfangskapazität von wenigstens 125 mAh/g und eine Entladungskapazität von wenigstens 105 mAh/g nach 500 Zyklen aufweist.

9. Positives Elektrodenmaterial nach Anspruch 7, wobei M = Ti.

10. Positives Elektrodenmaterial nach irgendeinem der Ansprüche 1 bis 4, 8 und 9, wobei z innerhalb eines Bereichs von 0 < z ≤ 0,1 liegt.

11. Positives Elektrodenmaterial nach Anspruch 10, wobei das positive Li-Ionen-Elektrodenmaterial eine Coulombsche Wirksamkeit zwischen 97 - 100 % bei einer C/3-Zyklusrate aufweist.

12. Positives Elektrodenmaterial nach Anspruch 10 oder 11, wobei z innerhalb des Bereichs von 0 < z ≤ 0,05 liegt.

13. Positives Elektrodenmaterial nach Anspruch 12, wobei z innerhalb des Bereichs von 0 < z ≤ 0,02 liegt.

14. Positives Elektrodenmaterial nach Anspruch 13, wobei z = 0,01.

15. Positives Elektrodenmaterial nach Anspruch 14, wobei d = 0.

16. Verwendung des positiven Elektrodenmaterials gemäß irgendeinem der Ansprüche 1 bis 15 als ein positives Hochspannungs-Lithium-Ionen-Elektrodenmaterial.

## Revendications

1. Matériau d'électrode positive comprenant du Li, du Co, du Fe et un phosphate, **caractérisé en ce qu'**il comprend : un matériau d'électrode positive Li-ion ayant une stoechiométrie nominale de :
Li_{1+y/2}Co_{1-x-y-z-d}Si_{z}FeₓM_{y}M'_{d}(PO₄)_{1+y/2},
où M est un cation trivalent de Cr, M' est un cation divalent choisi parmi au moins l'un de Mn, Ni, Zn, Sr, Cu, Ca et/ou Mg, y est compris dans la plage 0,02 ≤ y ≤ 0,08, x est compris dans la plage 0,05 ≤ x ≤ 0,15, z est compris dans la plage 0 ≤ z ≤ 0,10, et d est compris dans la plage 0 ≤ d ≤ 0,20.

2. Matériau d'électrode positive comprenant du Li, du Co, du Fe et un phosphate, **caractérisé en ce qu'**il comprend : un matériau d'électrode positive Li-ion ayant une stoechiométrie nominale de :
L1_{1+y/2}Co_{1-x-y-z-d}Si_{z}FeₓM_{y}M'_{d}(PO₄)_{1+y/2},
où M est un cation trivalent de Ti, M' est un cation divalent choisi parmi au moins l'un de Mn, Ni, Zn, Sr, Cu, Ca et/ou Mg, y est compris dans la plage 0,02 ≤ y ≤ 0,08, x est compris dans la plage 0,05 ≤ x ≤ 0,15, z est compris dans la plage 0 ≤ z ≤ 0,10, et d est compris dans la plage 0 ≤ d ≤ 0,20.

3. Matériau d'électrode positive selon la revendication 1 ou 2, dans lequel ledit matériau d'électrode positive Li-ion présente une capacité initiale d'au moins 120 mAh/g.

4. Matériau d'électrode positive selon l'une quelconque des revendications 1 à 3, dans lequel ledit matériau d'électrode positive Li-ion présente une capacité de décharge d'au moins 100 mAh/g après 500 cycles.

5. Matériau d'électrode positive selon l'une quelconque des revendications 1 à 4, dans lequel z = 0.

6. Matériau d'électrode positive selon la revendication 5, dans lequel y est compris dans la plage 0,04 ≤ y ≤ 0,06 et x est compris dans la plage 0,08 ≤ x ≤ 0,12.

7. Matériau d'électrode positive selon la revendication 6, dans lequel y = 0,05 et x = 0,10.

8. Matériau d'électrode positive selon l'une quelconque des revendications 1 et 3 à 7, dans lequel M = Cr, et ledit matériau d'électrode positive Li-ion présente une capacité initiale d'au moins 125 mAh/g et une capacité de décharge d'au moins 105 mAh/g après 500 cycles.

9. Matériau d'électrode positive selon la revendication 7, dans lequel M = Ti.

10. Matériau d'électrode positive selon l'une quelconque des revendications 1 à 4, 8 et 9, dans lequel z est compris dans la plage 0 < z ≤ 0,1.

11. Matériau d'électrode positive selon la revendication 10, dans lequel ledit matériau d'électrode positive Li-ion présente un rendement faradique compris entre 97 et 100 % pour un taux de cycle de C/3.

12. Matériau d'électrode positive selon la revendication 10 ou 11, dans lequel z est compris dans la plage 0 < z ≤ 0,05.

13. Matériau d'électrode positive selon la revendication 12, dans lequel z est compris dans la plage 0 < z ≤ 0,02.

14. Matériau d'électrode positive selon la revendication 13, dans lequel z = 0,01.

15. Matériau d'électrode positive selon la revendication 14, dans lequel d = 0.

16. Utilisation du matériau d'électrode positive selon l'une quelconque des revendications 1 à 5 en tant que matériau d'électrode positive lithium-ion haute tension.
